# EUROPEAN PATENT APPLICATION

(11) **EP 3 404 003 A1**
(43) Date of publication of application: **21.11.2018**
(21) Application number: 18172415.4
(22) Date of filing: 15.05.2018
(51) Int. Cl.: C04B 35/622, C04B 35/628

(54) **THE PRODUCTION METHOD OF SELF-SUPPORTING ULTRA-THIN HOLLOW CERAMIC FIBRES BY THE UTILIZATION OF SACRIFICIAL TEMPLATES**

(30) Priority: 17.05.2017 CZ 20170276
(71) Applicant: Vysoké Uceni Technické V Brne, 601 90 Brno (CZ)
(72) Inventor: Salamon, David, 61200 Brno (CZ); Gockert, Radek, 74235 Odry (CZ); Rolecek, Jakub, 57001 Litomysl (CZ)
(74) Representative: Malusek, Jiri

(57) **Abstract**

A method for production of self-supporting structures with features of the hollow ceramic fibre, where the sacrificial template is covered at least by one layer of sinterable particles, followed by drying of the coated sacrificial template, followed by pyrolysis of the sacrificial template, followed by sintering of the green body to the structure of the hollow ceramic fibre, where the sacrificial template is in a shape of fibre containing at least 50% of carbon, and the pyrolysis completely removes the sacrificial template.

## Description

### Background of the invention

This invention is related to a method which uses a sacrificial template to produce self-supporting ultra-thin hollow ceramic fibres.

### State of the art

Ceramic fibers can be essential components of new hightemperature-resistant lightweight materials.

The term "ceramic fibers" includes all non-metallic inorganic fibers (oxide or non-oxide) with the exception of fibers manufactured via solidification of glass melts

The difference between ceramic fibers and glass fibers became more difficult to determine during the last years, because ceramics fibers produced via new precursor or sol-gel routes can also has an amorphous structure and the production process can also contain a melt processing step.

The resulting ceramic fibers can thus be either polycrystalline, partially crystalline or amorphous, but the expression "glass fibers" should only be applied to fibers that are produced via solidification of typical glass melts based on silicate systems. If melts are based on minerals like basalt, the fibers should be called "mineral fibers".

Ceramics fibers manufacturing is often a difficult proces and in most cases polymeric components or structures are the key factors for fiber spinning. Organic polymers are used as additives to produced oxide ceramic fibers and inorganic polymers are the precursors for production of the non-oxide ceramic fibers. All the productution methods can be classified as direct or indirect.

The indirect fiber production techniques are the CVD process (Chemical Vapour Deposition) and a relic proces. The direct fiber production technique is spinning from precursors or using directly ceramic particles.

In the case of the CVD method ceramic fibers are formed by vapor deposition of a ceramic material on the carrier fibers. Those carrier fibers forms the core of the resulting ceramic fibers. Because the carrier material remains in the fiber, the resulting fibers are mostly thick, stiff, but difficult to process

In the case of the relic proces absorbent organic fiber materials (mostly cellulose-based) are saturated with salt solutions or sols. The organic material is burnt afterwars and salt or sol is converted to ceramics.

The spinning method based on molecularly dispersed precursors is using dissolved salts in the spinning dopes, which can be converted into ceramics during a calcination step. Salt is disolved in form of ions, which are disperzed. In addition to the salt, the spinning dope consists of organic polymers to achieve the rheological properties needed for the spinning process. Water or water/alcohol mixtures are usually used as solvents. It is possible to add nanoscaled ceramic particles in some cases to control the structure formation during the ceramic formation. In this case, the process is called the *"solution process"*

Spinning dopes based on colloidally dispersed precursors is similar to the one mentioned above, but here colloidal inorganic components are used as preceramic precursors instead. They polymers are also used to adjust rheological properties. The same solvents are used as stated above. In this case, the process is called the "*sol*/*gel process"*

Spinning dopes containing coarse ceramic particles are added to salt or sol based spinning dopes in order to increase the ceramic yield and to reduce the shrinkage during calcinations and sintering. In this case, the process is called the *"slurry process"*

Spinning dopes based on inorganic polymers consists of either a solution of an inorganic polymer, which can be spun via a dry spinning process or the precursor polymers are meltable and can be spun using a melt spinning process. It is no need add polymer to adjustment of rheological properties. In this case, the process is called the *"precursor polymer process"* and is particularly used for the production of the non-oxide ceramic fibers.

Known examples of oxide ceramic fibers are fibers made of aluminia (Al2O3), mullite (mixed oxides of Al2O3 and SiO2), YAG (yttrium aluminum garnet, Y3Al5O12), and zirkonium dioxide (ZrO2). All these fibers have a polycrystalline microstructure and are characterized by high values of tensile strength and elastic modulus values. They are resistant to oxidation, even at elevated temperatures, due to their oxidic nature. Although oxidation is not a problem of oxide fibers, creep, due to grain boundary sliding at high temperatures, is a limitation and the creep is more severe than I case of SiC-based fibers. Oxide fibers which are currently commercially available are mostly based on Al₂O₃ or Al₂O₃/SiO₂ ceramics

Non-oxide ceramic fibers are used for high temperature applicationss exhibit high tensile strength and elastic modulus values (higher than oxide fibers) and due to their structure, which is amorphous or polycrystalline, exhibit also lower creep rate at elevated temperatures than the polycrystalline oxide fibers. The use of non-oxide fibers is limited by their susceptibility to oxidative degradation. The lower the oxygen content of the fiber the better is the oxidation resistance. Commercially available non-oxide ceramic fibers are based on SiC and Si-C-O materials, those materials contain undesirable oxygen to a greater or lesser extent and can also contain some percent of Ti, Zr, Al, or B.

Various industrial processes apply solid sacrificial templates for production of cellular and macroporous ceramics. The original invention is dated to the 1960s, when polymeric foam was used such as sacrificial template in the patent of Schwartzwalder and Somers. Nowadays, the most of the ceramic foams are prepared by the replication technique using the sacrificial template. Minimal size of the replicated pores is approximately 200 microns due to limited possibility of the polymeric foam infiltration. The disadvantage of the polymeric foam as the sacrificial template is the possibility of cracks formation during the pyrolysis (removal) of the polymeric foam. The extraction of organic fugitives by pyrolysis leads to volume changes and generated gas can damage the final structure. The final mechanical properties can be enhanced by various techniques as: impregnation by organic precursors, infiltration by gas deposition (physical or chemical), hydrothermal reaction, sol/gel chemical reaction, or chemical reaction with the template. Natural fibres were used for the preparation of tubular and porous ceramics as the sacrificial template, but with shape and size limitations.

Main problems which limits a selection of the sacrificial template are:
- thermal expansion of the selected materials
- gas production during pyrolysis

The film thickness deposited on the template can be divided into three areas:
- instable area, where the coating is too thin (low strength) to the compensate volume changes and tensions during the pyrolysis (thermal removal); The original shape of the template is destroyed.
- instable area, where the coating is too thin (low strength) to the compensate volume changes and tensions during the pyrolysis (thermal removal); The original shape of the template is preserved, but cracks and defects in the coating are present.
- stable area, where the coating is thick enough (high strength) to prevent crack formation and to compensate defects in the coating. The original shape of the template is preserved and mechanical stability of the system is increasing.

Suggested strategies based on the behaviour of the sacrificial template during pyrolysis are:
- sacrificial templates with thermal stability lower than binder applied in the coating of the template (example is human hair)
- sacrificial templates with very low thermal expansion that can be compensated by mechanical strength of the applied coating (example are aramides)
- sacrificial templates with internal structure eliminating thermal expansion and gas formation during the pyrolysis (examples are porous and hollow fibres made of polypropylene or polyamide)

Disadvantages of the currently applied methods for the commercial manufacturing of ceramic fibres are:
- the necessity of the spinning process application of the and its limitations especially for preparation of hollow fibres preparation,
- the necessity of controlled chemical reaction during the fibre formation from polymeric precursors,
- the necessity of melt utilization for glass fibres preparation
- the necessity of absorbing organic fibres utilization
- the necessity of deposition by the CVD process deposition
- application of ceramic particles during the spinning process leads to abrasion and wear of the spinning apparatus
- application of organic precursors requires organic solvents

Hollow ceramic fibres preparation by the application of sacrificial templates has following disadvantages:
- The necessity to achieve significant coating thickness on the sacrificial template to compensate thermal expansion during pyrolysis. This compensation is necessary even for sacrificial templates with small thermal expansion.
- The necessity of the sacrificial templates internal design (hollow and porous fibres), if the thermal expansion and the influence of pyrolysis are not compensated by the strength of the deposited layer.
- The necessity of sacrificial templates with thermal stability lower than the binder of ceramic particles located in the coating. This is limiting possibility of templates and binders selection.

Aim of the invention is to present the sacrificial template and the production method for self-supporting ultra-thin hollow ceramic fibres, which eliminates the above mentioned state of the art disadvantages.

### Features of the invention

The disadvantages of the current above mentioned methods are extensively eliminated by the method of the production of self-supporting structures with the features of the hollow ceramic fibre, where the sacrificial template is covered, at least, by one layer of sinterable particles, followed by drying of the coated sacrificial template, followed by pyrolysis of the sacrificial template, followed by the sintering of the green body to the structure of the hollow ceramic fibre, where the sacrificial template has shape of fibre containing at least 50% of carbon, and the pyrolysis completely removes the sacrificial template.

In an advantageous embodiment the green body phase transformation occurs in green body.

In an advantageous embodiment the diameter of the sacrificial template is 35 □m or 12 □m.

In an advantageous embodiment ceramic particles are sinterable, examples are titanium dioxide or hydroxyapatite.

In an advantageous embodiment the coating is composed of sinterable particles with thickness from 1 nm to 500 □m.

In an advantageous embodiment the pyrolysis and sintering is carried out at a temperature 500 °C or higher.

### Description of the drawings

The invention will be further explained by use of the drawings, where the Fig. 1 presents the self-supporting ultra-thin hollow ceramic fibre with the dense titanium dioxide wall, produced by the method of the invetion. The Fig. 2a presents the self-supporting ultra-thin hollow ceramic fiber with the hydroxyapatite wall of in the form of a net, produced by the method of the invetion. The Fig. 2b presents the detail of self-supporting hollow ceramic fibres presented in Fig. 2a. The Fig. 3 presents the self-supporting hollow ceramic fiber with the porous hydroxyapatite wall, produced by the method of the invetion.

### Preferred embodiments of the invention

The production method of self-supporting structures with the features of the hollow ceramic fibre contains following steps:
- selection of the sacrificial template
- coating of the sacrificial template by at least by one layer of sinterable particles with thickness from 1 nm to 500 □m
- drying of the coated sacrificial template
- transformation to the structure of the ultra-thin hollow ceramic fibre by pyrolysis, when the process is usually carried out at temperature 500 °C and higher
- sintering of the green body to obtain the structure of the hollow ceramic fibre at temperatures suitable for the designed ceramic material and porosity

The green body, originally in English "green body", is the body created by shaping (forming) in the clasiccal ceramic technology, from ceramic powder (raw material) and holds together by weak bonds.

Preferably, a phase tranformation occurs in the green body during the sintering process and changes the composition of the final ceramic material. This step is possible during or after the sintering process.

The sacrificial template is in a shape of fibre containing at least 50% of carbon. The diameter of the sacrificial template is preferably 35 □m or 12 □m. The template application does not require compensation of the volume changes or gas production during pyrolysis by high mechanical strength of the coating. This method enables to achieve ultra-thin walls of the prepared fibres.

The sinterable particles are ceramic particles, examples are titanium dioxide or hydroxyapatite.

The presented method usually enables to produce self-supporting hollow ceramic fibres with outside diameter below 100 □m and above 1 □m. The wall thickness is usually from 0.05 □m to 49 □m. The fibre length is not limited. The shape and diameter of the inner hole reflects the shape and dimensions of the template according to the invention. Generally, a fibre structure is a structure that is significantly longer than it is wider. However, structures with length equal or shorter than half of the length can be prepared by the presented invention.

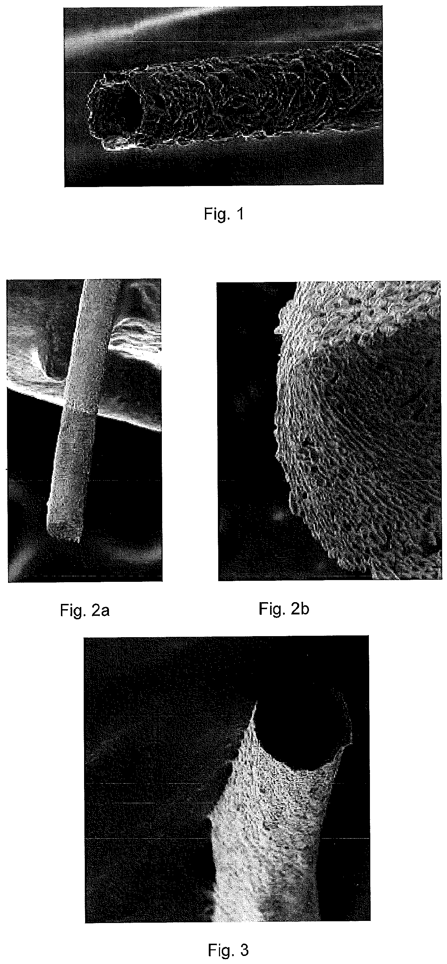

The Fig 1. presents self-supporting structure with the features of the hollow ceramic fibre, where the particles of titanium dioxide formed continuous coating from the particles suspension deposited by the dip-coating technique. The pyrolysis of the sacrificial template and sintering of titanium dioxide lead to formation of the hollow ceramic fiber, the thickness of the dense wall is 1 □m and the inner diameter of the hollow ceramic fiber is approximately 9 □m.

The Fig 2. presents self-supporting structure with the features of the hollow ceramic fibre, where the particles of hydroxyappatite formed continuous coating from the particles suspension deposited by the dip-coating technique. The pyrolysis of the sacrificial template, sintering of hydroxyappatite, and decomposition of hydroxyappatite at 1200 °C lead to formation of the hollow ceramic fiber, the thickness of the wall in the form of a net is below 1 □m and the inner diameter of the hollow ceramic fiber is approximately 28 □m.

The Fig 3. presents self-supporting structure with the features of the hollow ceramic fibre, when particles of hydroxyappatite formed continuous coating from the particles suspension deposited by the dip-coating technique. The pyrolysis of the sacrificial template and sintering of hydroxyappatite at 950 °C lead to formation of the hollow ceramic fiber, the thickness of the porous wall is approximatelly 1 □m and the inner diameter of the hollow ceramic fiber is approximately 17 □m.

The advantages of the presented invention are low production cost and high productivity in time, possibility of the ultra-thin ceramic wall manufacturing (also in the form of a net), porous or dense materials walls manufacturing, and the ability to prepare self-supporting structures.

The fibers with very thin walls have many applicaitons such as: heat exchangers, liquid separation membranes, coatings for other microstructures, sensors, detectors, fuel cells, reinforcing parts for composites, scaffolds for tissue regeneration.

## Claims

1. A method for production of self-supporting structures with features of the hollow ceramic fibre, where the sacrificial template is covered at least by one layer of sinterable particles, followed by drying of the coated sacrificial template, followed by pyrolysis of the sacrificial template, followed by sintering of the green body to the structure of the hollow ceramic fibre, where the sacrificial template is in a shape of fibre **characterised in, that** the fibre containing at least 50% of carbon, and the pyrolysis completely removes the sacrificial template.

2. Method according to the claim 1 **characterised in, that** furthermore a phase transformation of the green body is performed.

3. Method according to the claim 1 or 2, **characterised in, that** the diameter of the sacrificial template is 35 □m or 12 □m.

4. Method according to anyone of the claims 1 to 3, **characterised in, that** the ceramic particles are sinterable, e.g. titanium dioxide or hydroxyapatite.

5. Method according to anyone of the claims 1 to 4, **characterised in, that** the coating of the sinterable particles has thickness from 1 nm to 500 □m

6. Method according to anyone of the claims 1 to 5, **characterised in, that** the pyrolysis and sintering is carried out at a temperature 500 °C or higher.
